## Europäisches Patentamt

### European Patent Office

### Office européen des brevets

(19)

(11) Publication number: **0 199 959 B1**

(12) # EUROPEAN PATENT SPECIFICATION

(45) Date of publication of the patent specification: **14.06.89**

(51) Int. Cl.⁴: **F16K 31/06**

(21) Application number: **86103617.6**

(22) Date of filing: **18.03.86**

(54) Closed loop type proportional electromagnetic valve for hydraulic control.

(30) Priority: **01.04.85 JP 66501/85**

(43) Date of publication of application:
**10.12.86 Bulletin 86/45**

(45) Publication of the grant of the patent:
**14.06.89 Bulletin 89/24**

(84) Designated Contracting States:
**DE FR GB**

(56) References cited:
**EP-A- 0 171 998**
**JP-A- 74 002 217**
**US-A- 4 250 922**
**US-A- 4 390 158**
**US-A- 4 535 816**

(73) Proprietor: **HITACHI, LTD., 6, Kanda Surugadai 4-chome Chiyoda-ku, Tokyo(JP)**
Proprietor: **Hitachi Automotive Engineering Co., Ltd., 3085-5, Saikoji Higashi-ishikawa, Katsuta-shi Ibaraki 312(JP)**

(72) Inventor: **Fujitsugu, Yutaka, 1457-37 Ooaza Tarazaki, Katsuta-shi Ibaraki 312(JP)**
Inventor: **Ito, Tomoo, 20-14, Higashi-ooshima 3-chome, Katsuta-shi Ibaraki 312(JP)**
Inventor: **Uchida, Tadao, 3600 Yamagata Yamagata-machi, Naka-gun Ibaraki 319-31(JP)**

(74) Representative: **Patentanwälte Beetz sen. - Beetz jun. Timpe - Siegfried - Schmitt-Fumian, Steinsdorfstrasse 10, D-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The present invention relates to a closed loop type proportional electromagnetic valve for hydraulic control, and more particularly to a closed loop type proportional electromagnetic valve for hydraulic control of the kind as disclosed in JP-A 2 217/1974. Such a closed loop type proportional electromagnetic valve for hydraulic control serves for use in an automatic transmission system and a power steering-unit or the like of a motor vehicle.

Closed loop type proportional electromagnetic valves for hydraulic control include a hydraulic control solenoid valve. Tha hydraulic control solenoid valve is the most important device in the hydraulic control system for motor vehicles. The hydraulic control solenoid valve is adapted for use in the automatic transmission and the power steering-unit or the like in the motor vehicle.

In an automatic transmission system of a motor vehicle, taken as example, a throttle sensor detects the opening degree of the accelerator, and the signals from the various sensors are processed by a microprocessor. The hydraulic control solenoid valve receives an appropriate signal from the driver. The hydraulic control solenoid valve controls the main regulator and varies the line pressure fluid. The line pressure fluid is transmitted to the friction element by the solenoid. By this regulated line pressure fluid, the torque to the wheels can be transmitted smoothly.

In for example, US-A 4 250 922 a conventional closed loop type proportional electromagnetic valve for hydraulic control for use in connection with an automatic transmission system of a motor vehicle is proposed.

The electromagnetically operated control valve assembly of the hydraulic control solenoid valve includes an electromagnet and a valve unit. The end portion of a plunger which projects into a valve sleeve forms a sliding spool of the valve unit. The inlet port is connected to the main line pressure fluid of the control system of a motor vehicle, whereas the outlet port leads to the conduit supplying a regulated line pressure fluid to the coupling members of the automatic transmission. The exhaust port opens in a pressure free space.

However, the above mentioned prior art has some disadvantages. As the flow of the line pressure fluid is switched by the sliding spool valve, the force of the line pressure fluid is applied to the sliding spool valve in its axial direction so that the balance of forces becomes unstable and therefore a resonance phenomenon of the movable parts is generated. This resonance phenomenon occurs over the whole stroke of movement of the sliding spool valve. The self-excited vibration or the resonance phenomenon of the sliding spool valve leads to a number of problems.

The resonance phencmenon occurs in the small control current domain, namely in the relatively high output-pressure domain. Then the value of the output-pressure varies largely and a good line pressure fluid control is difficult to achieve.

The resonance frequency of the hydraulic control solenoid valve is governed by the specific frequency of a system having a single degree of freedom and is determined by the weight of the movable parts and the spring constant of the spring, usually 30–100 Hz. It is functionally difficult to change the weight of the movable parts and the spring constant of the spring substantially.

In order to solve the unstable balance of forces and the resonance phenomenon of the movable parts of the hydraulic control solenoid valve for a motor vehicle for example, in JP-A 2 217/1974 a method for the provision of a damping action is proposed.

In above JP-A 2 217/1974, an electromagnetically operated control sliding spool valve or the hydraulic control solenoid valve includes a movable armature having a hole therethrough. The through hole provided in the movable armature gives the damping effect to the movable armature of the plunger.

However, to realize this method, a chamber for a movable armature must be fully filled with line pressure fluid. Further because the damping effect is obtained by a clearance between the electromagnetic coil portion and the periphery of the movable armature and the dimensions of the through hole in the movable armature, the structure of the plunger becomes complicated and further the design possibilities of the plunger which are necessary to determine an attraction force are restricted.

The object of the present invention resides in the provision of a closed loop type proportional electromagnetic valve for hydraulic control wherein the resonance phenomenon of the sliding spool valves can be prevented and wherein the design possibilites of the plunger are not restricted.

In accordance with the present invention a closed loop type proportional electromagnetic valve for hydraulic control comprises: a coil case; a body fixed to the coil case; a coil provided in the coil case; a plunger provided in the coil case; the coil provided in such a manner that the coil attracts the plunger against the tension of the spring upon excitation. A shaft is provided in the body in such a manner that the shaft slides freely in the body. A first spool portion and a second spool portion are connected with said shaft, a sliding valve spool comprising said shaft, said first spool portion and said second spool portion. An inlet port, an exhaust port and an outlet port are provided in said body; the first spool portion and the second portion are closing and opening the inlet port and the exhaust port; the outlet port is communicated with the shaft between the first spool portion and the second spool portion; a feedback chamber is provided in the body and is communicated with the shaft through a feedback channel; and the feedback chamber has a larger diameter than the diameter of the first spool portion and an end portion of the first spool portion opposite the second spool portion is protruded into the feedback chamber.

To achieve the above object a thin plate is fixed to the end portion of the first spool portion and is positioned in the feedback chamber so as to form a constricted part of a flow passage formed between the inside wall of the feedback chamber and the perimeter of said thin plate.

The ration of areas of a cross-sectional area of the constricted part of the flow passage and the cross-sectional surface area of the thin plate is defined so as to be between a ration of areas of an upper limit of a practical response time and a ratio of areas of less than a resonance domain.

A closed loop type of proportional electromagnetic valve for hydraulic control of the present invention facilitates prevention of the resonance phenomenon of sliding spool valves and at the same time removes restrictions on the design as to the dimensions of the plunger.

To increase the damping coeifficient ($C_d$) it is possible to provide a damping mechanism or a damping means at the end portion of one of the spool portions which is positioned in the feedback chamber which is filled with the line pressure fluid or pressure oil. The damping mechanism or the damping means gives the effect to the sliding spool valve and also functions as the stabilization of the behavior of the sliding spool valve.

Brief Description of the Drawings:

Fig. 1 is a vertical sectional view of an embodiment of a closed loop type proportional electromagnetic valve for hydraulic control of the present invention;

Fig. 2 is a sectional view of taken along line II–II of Fig. 1;

Fig. 3 is a diagram showing the relationship between the ratio of a sectional area of a constricted part surrounding a thin plate and the cross-sectional surface area of the thin plate and the response time of the closed loop type proportional electromagnetic valve for hydraulic control shown in Fig. 1;

Fig. 4 is a view of the damping mechanism provided in the closed loop type proportional electromagnetic valve for hydraulic control;

Fig. 5 shows a graph illustrating relationship between the clearance ($\varepsilon$) and the thickness ($\ell$) of the thin plate; and

Fig. 6 shows a graph illustrating relationship between the damping coefficient ($C_d$), and the sliding spool valve amplitude and the resonance frequency.

Detailed Description of Preferred Embodiments:

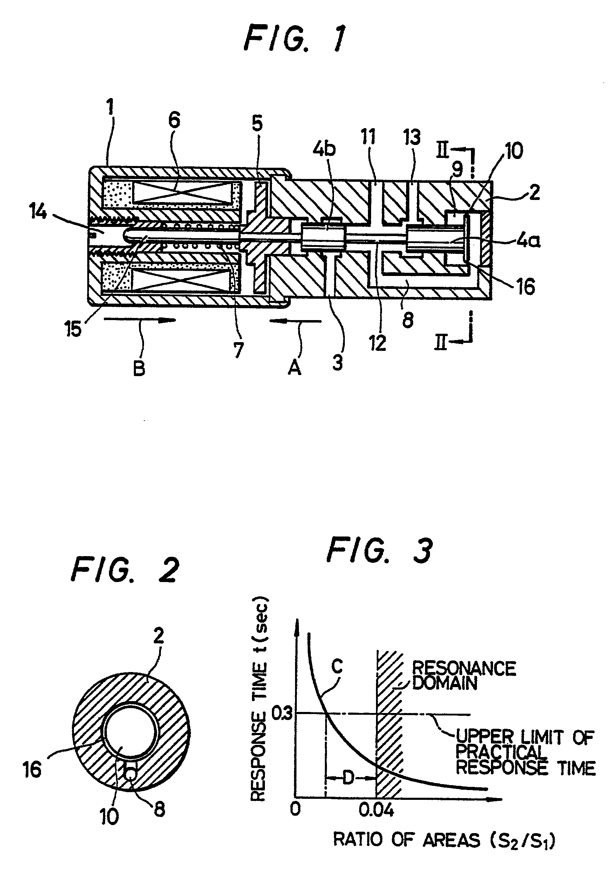

One embodiment of a closed loop type proportional electromagnetic valve for hydraulic control of the present invention will be hereinunder described with reference to Fig. 1 and Fig. 2.

An electromagnetic valve shown in Fig. 1 and Fig. 2 is a closed type proportional electromagnetic valve and also is a hydraulic control solenoid valve for a motor vehicle.

In the drawings, a body 2 is fixed to a coil case 1. A coil 6, a spring 7 and a plunger 5 are provided in the coil case 1. The plunger 5 is formed so as to be attracted by the excitation of the coil 6 against the tension of the spring 7 at the time of excitation. A sliding spool valve comprises a shaft 12, a first and a second spool portion 4a and 4b, respectively.

The first spool portion 4a and the second spool portion 4b are fixed to both ends of the shaft 12, respectively. The first spool portion 4a and the second spool portion 4b open and close an inlet port 13 and an exhaust port 3, respectively. The inlet port 13 and the exhaust port 3 are provided in the body 2.

An outlet port 11 is also provided in the body 2 and is communicated with the peripheral portion of the shaft 12 between the first spool portion 4a and the second spool portion 4b. The diameter of the peripheral portion of the shaft 12 is smaller than the diameters of the first spool portion 4a and the second spool portion 4b.

A feedback chamber 9 is provided in the end portion of the body 2. The end portion of the first spool portion 4a opposite to the second spool portion 4b is protruded into the feedback chamber 9.

A round shape thin metal plate 10 acting as a damping means is fixed to the protruded end portion of the first spool portion 4a and is positioned in the feedback chamber 9.

The feedback chamber 9 has a larger diameter than the diameter of the first spool portion 4a and is communicated with the peripheral portion of the shaft 12 through a feedback channel 8. The feedback channel 8 is provided in the body 2 and is also communicated with the peripheral portion of the shaft. The shaft 12 may be formed integrally with a shaft 15 holding the plunger 5.

A thrust bearing 14 supports the shaft 15 so as to make it slide freely in axial direction. The shaft 15 is formed with a large diameter shaft portion and a small diameter shaft portion is solidly inserted in the plunger 5 in a central portion thereof. The end portion of the small diameter shaft portion of the shaft 15 contacts the end portion of the second spool portion 4b.

A constricted part 16 of the flow passage for the line pressure fluid in the feedback chamber 9 is defined by the peripheral surface of the round thin plate 10 and a cylindrical interior wall of the feedback chamber 9. A cross-sectional area ($S_2$) of the constricted part 16 of the flow passage is so defined as to be not larger than 0.04 of the cross-sectional surface area ($S_1$) of the thin plate 10.

With this construction, the input flow of the line pressure fluid or the pressure oil from the inlet port 13 is determined by the position of the first spool portion 4a which slides in the body 2. A backflow through the exhaust port 3 is determined by the position of the second spool portion 4b which slides in the body 2. A predetermined reduced line pressure fluid is supplied to the outlet port 11. The predetermined reduced line pressure fluid is supplied to the feedback chamber 9 through the feedback channel 8.

The first spool portion 4a is pushed in the direction of an arrow mark A by the line pressure fluid supplied to the feedback chamber 9. The shaft 12 is attracted in the direction of the arrow mark A by the plunger 5 attracted by the coil 6. The first spool portion 4a and the shaft 12 slide until the resultant force of above two forces is balanced with the reactive force of the spring 7 in the direction of an arrow mark B.

If the output flow of the line pressure fluid is reduced due to the increase of the flow at the outlet port 11 or for any other reason, the line pressure sluid supplied to the feedback chamber 9 is also reduced and the balance is lost so that the first spool portion 4a and the second spool portion 4b slide in the direction of the arrow mark B.

Therefore, the input value of the line pressure fluid from the inlet port 13 is increased and the backflow through the exhaust port 3 is reduced. As a result, the first spool portion 4a and the second spool portion 4b slide until the value of the line pressure fluid in the feedback chamber 9 becomes the predetermined value.

In this case, the movement of the line pressure fluid in the feedback chamber 9 is restricted by the narrow flow passage part 16 between the peripheral surface of the thin plate 10 and the interior wall of the feedback chamber 9 and thereby the damping action is effected.

The resonance frequency is governed by the specific frequency of a system having a single degree of freedom and is determined by the weight of the plunger 5 and the spring constant of the spring 7. Although it is functionally difficult to change the weight of the plunger 5 and the spring constant of the spring 7 substantially.

In this embodiment of the present invention, the damping action is applied to the first spool portion 4a by the constricted part 16 defined by the peripheral surface of the thin plate 10 and the inside wall of the feedback chamber 9 and the resonance frequency does not reach the specific frequency of the system having the single degree of freedom, therefore, the resonance phenomenon is avoided.

Fig. 3 shows the response time (t) of the output line pressure which reaches the predetermined line pressure from the optional output line pressure in this embodiment with the ratio of areas $(S_2/S_1)$ of the cross-sectional area $(S_2)$ of the constricted part 16 and the cross-sectional area $(S_1)$ of the thin plate 10 as an abscissa and the response time as an ordinate.

In Fig. 3, the hatched area represents the resonance domain and the upper limit of the response time (t) is 0.3 second. The response time (t) longer than 0.3 second is not practical. A curve C represents a response time curve. The response time curve C is the result of experiments and if the ratio of the areas $(S_2/S_1)$ is more than 0.04, the response time curve C enters the resonance domain and the hydraulic control solenoid valve cannot be operated. Thus, the ratio of the areas $(S_2/S_1)$ must not exceed 0.04.

However, if the ratio of areas $(S_2/S_1)$ is too much smaller than 0.04, the response time curve C crosses over the upper limit of the practical response time (0.3 second). Therefore, if a value is used lying within a portion D shown in Fig. 3 of the response time curve C below the response time (0.3 second) with the ratio of the areas $(S_2/S_1)$ less than that of the resonance domain, the output line pressure can be controlled from the optional output line pressure to the predetermined line pressure steadily without producing the resonance phenomenon and the design possibilities of the plunger 5 are not restricted.

As in the closed loop type proportional electromagnetic valve for hydraulic control of the present invention, the thin plate 10 is fixed to an end portion of the first sliding spool valve 4a in the feedback chamber 9 and the construction part of the line pressure fluid is provided in the feedback chamber 9 by making the ratio of areas $(S_2/S_1)$ not more than 0.04 to give the first spool sliding valve 4a the damping action.

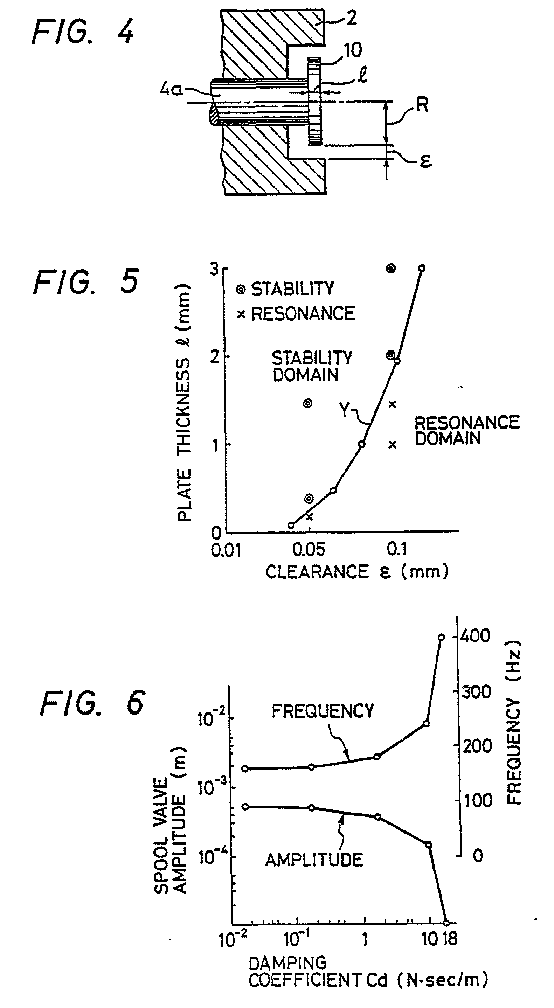

The provision of the damping mechanism such as a round shape thin plate 10 attached to a sliding spool valve 4a is shown schematically in Fig. 4. In the hydraulic control solenoid valve having the round shape thin plate 10 or the damping plate 10, the damping coefficient $(C_d)$ is defined as follows.

$$C_d = \frac{6\ \mu \ell A^2}{\pi R \varepsilon^3}$$

$\mu$: coefficient of viscosity
$\ell$: thickness of the thin plate 10
A: the cross-sectional surface area of the thin plate 10
R: radius of the round thin plate 10
$\varepsilon$: clearance between the inside wall of the body 2 and the perimeter of the thin plate 10.

Fig. 6 shows the relationship between the damping coefficient $(C_d)$, and the spool portion amplitude and the resonance frequency.

According to the increase of the damping coefficient $(C_d)$, the resonance frequency increases and on the other hand the sliding spool valve amplitude decreases. When the value of the damping coefficient $(C_d)$ becomes larger than 18 N·sec/m, the self-excited vibration or the resonance phenomenon of the hydraulic control solenoid valve disappear entirely therefrom.

Fig. 5 shows the relationship of the clearance $(\varepsilon)$ which is a gap between the inside wall of the body 2 and the perimeter of the round shape thin plate 10, and the thickness $(\ell)$ of the thin plate 10. The curve Y indicates the frontier between the stability and the resonance domain according to the results of the calculation.

The empirical results are substantially consistent with the results of calculation. When the clearance of the gap $(\varepsilon)$ is 0.1 mm, and further the thickness $(\ell)$ of the thin plate 10 is more than 2 mm, the resonance phenomenon disappears.

A large clearance $(\varepsilon)$ is desirable from the standpoint of manufacturing of the hydraulic control solenoid valve, but a larger clearance $(\varepsilon)$ needs a larger thickness $(\ell)$ of the thin plate 10. However, the larger thickness $(\ell)$ of the thin plate 10 is apt to influence the viscosity of the line pressure fluid, so that a small thickness $(\ell)$ of the thin plate 10 is desirable.

Accordingly, in the above damping mechanism for the hydraulic control solenoid valve of the present invention, the dimension of the clearance $(\varepsilon)$ is defined as to be 0.1 mm and the dimension of the thickness $(\ell)$ of the thin plate 10 is defined as to be 2 mm.

The hydraulic control solenoid valve having the above damping mechanism generates no resonance phenomenon, and also satisfies the requirements of other various characteristics.

Accordingly, the resonance phenomenon caused by the vibration of the second spool portion 4b due to the force of line pressure fluid flowing in from the inlet port 13 is avoided, and the design possibilities of the plunger 5 are not restricted.

## Claims

1. A closed loop type proportional electromagnetic valve for hydraulic control comprising: a coil case (1); a body (2) fixed to said coil case (1); a coil (6) provided in said coil case (1); a spring (7) provided in said coil case (1); a plunger (5) provided in said coil case (1); said coil (6) provided in such manner that said coil (6) attracts said plunger (5) against the tension of said spring (7) upon excitation of said coil (6); a shaft (12) provided in said body (2) in such manner that said shaft (12) slides freely in said body (2); a first spool portion (4a) and a second spool portion (4b) connected with said shaft (12); a sliding valve spool comprising said shaft (12), said first spool portion (4a) and said second spool portion (4b); an inlet port (13) provided in said body (2); an exhaust port (3) provided in said body (2); an outlet port (11) provided in said body (2); said first spool portion (4a) and said second spool portion (4b) closing and opening said inlet port (13) and said exhaust port (3); said outlet port (11) communicates with said shaft (12) between said first spool portion (4a) and said second spool portion (4b); a feedback chamber (9) provided in said body (2) and in communication with said shaft (12) through a feedback channel (8); said feedback chamber (9) has a larger diameter than the diameter of said first spool portion (4a) and an end portion of said first spool portion (4a) opposite said second spool portion (4b) protrudes into said feedback chamber (9), characterized in that a thin plate (10) is fixed to the end portion of said first spool portion (4a) and is positioned in said feedback chamber (9) so as to form a constricted part (16) of a flow passage formed between the inner wall of said feedback chamber (9) and the perimeter of said thin plate (10), forming a damping member.

2. A closed loop type proportional electromagnetic valve for hydraulic control according to claim 1, characterized in that the ratio of areas ($S_2/S_1$) of the cross-sectional area ($S_2$) of said constricted part (16) of the flow passage and the cross-sectional surface area ($S_1$) of said thin plate (10) is between a ratio of areas ($S_2/S_1$) of an upper limit of a practical response time and a ratio of areas ($S_2/S_1$) of less than a resonance domain.

3. A closed loop type proportional electromagnetic valve for hydraulic control according to claim 2, characterized in that the cross-sectional area ($S_2$) of said constricted part (16) of the flow passage is not greater than 0.04 of the cross-sectional surface area ($S_1$) of said thin plate (10).

4. A closed loop type proportional electromagnetic valve for hydraulic control according to claim 3, characterized in that the interior wall of said feedback chamber (9) is formed cylindrically, and the thin plate (10) is formed in a round shape.

## Patentansprüche

1. Proportional-Elektromagnetventil mit Rückführung für hydraulische Steuerung, umfassend: ein Spulengehäuse (1); einen am Spulengehäuse (1) befestigten Körper (2); eine im Spulengehäuse (1) angeordnete Spule (6); eine im Spulengehäuse (1) vorgesehene Feder (7); einen im Spulengehäuse (1) vorgesehenen Kolben (5); wobei die Spule (6) derart vorgesehen ist, daß sie den Kolben (5) gegen die Zugkraft der Feder (7) bei Erregung der Spule (6) anzieht; eine im Körper (2) in solcher Weise vorgesehene Spindel (12), daß diese in dem Körper (2) frei verschiebbar ist; einen ersten Schieberabschnitt (4a), und einem zweiten Schieberabschnitt (4b), die mit der Spindel (12) verbunden sind; einen verschiebbaren Ventilschieber, bestehend aus der Spindel (12), dem ersten Schieberabschnitt (4a) und dem zweiten Schieberabschnitt (4b); eine im dem Körper (2) vorgesehene Einlaßöffnung (13); eine in dem Körper (2) vorgesehene Ausströmöffnung (3); eine in dem Körper (2) vorgesehene Auslaßöffnung (11); wobei der erste Schieberabschnitt (4a) und der zweite Schieberabschnitt (4b) die Einlaßöffnung (13) und die Ausströmöffnung (3) schließen und öffnen; wobei die Auslaßöffnung (11) mit der Spindel (12) zwischen dem ersten Schieberabschnitt (4a) und dem zweiten Schieberabschnitt (4b) in Verbindung steht; eine in dem Körper (2) vorgesehene Rückführungskammer (9), die mit der Spindel (12) über einen Rückführungskanal (8) verbunden ist; wobei der Durchmesser der Rückführungskammer (9) größer als der Durchmesser des ersten Schieberabschnittes (4a) ist und ein dem zweiten Schieberabschnitt (4b) ferner Endabschnitt des ersten Schieberabschnitts (4a) in die Rückführungskammer (9) ragt, dadurch gekennzeichnet, daß an dem Endabschnitt des ersten Schieberabschnittes (4a) eine dünne Platte (10) befestigt und in der Rückführungskammer (9) so positioniert ist, daß sie einen Drosselabschnitt (16) eines Strömungskanals bildet, der zwischen der Innenwand der Rückführungskammer (9) und dem Außenumfang der dünnen Platte (10) ausgebildet ist, so daß ein Dämpfungselement gebildet ist.

2. Proportional-Elektromagnetventil mit Rückführung für hydraulische Steuerung nach Anspruch 1, dadurch gekennzeichnet, daß das Flächenverhältnis ($S_2/S_1$) der Querschnittsfläche ($S_2$) des Drosselabschnitts (16) des Strömungskanals und der Querschnittsfläche ($S_1$) der dünnen Platte (10) zwischen einem Flächenverhältnis ($S_2/S_1$) einer Obergrenze einer praktikablen Ansprechzeit und einem Flächenverhältnis ($S_1/S_2$), das kleiner als ein Resonanzbereich ist, vorliegt.

3. Proportional-Elektromagnetventil mit Rückführung für hydraulische Steuerung nach Anspruch 2, dadurch gekennzeichnet, daß der Querschnittsbereich ($S_2$) des Drosselabschnitts (16) des Strömungskanals nicht mehr als 0,04 der Querschnittsfläche ($S_1$) der dünnen Platte (10) beträgt.

4. Proportional-Elektromagnetventil mit Rückführung für hydraulische Steuerung nach Anspruch 3, dadurch gekennzeichnet, daß die Innenwand der Rückführungskammer (9) zylindrisch und die dünne Platte (10) rund ist.

## Revendications

1. Soupape électromagnétique à action proportionnelle, du type à boucle fermée, pour une commande hydraulique, comprenant:
un logement de bobine (1); un corps (2) fixé audit logement de bobine (1); une bobine (6) disposée dans ledit logement de bobine (1); un ressort (7) prévu dans ledit logement de bobine (1); un noyau plongeur (5) prévu dans ledit logement de bobine (1); ladite bobine (6) étant disposée de manière à attirer ledit noyau plongeur (5) à l'encontre de la traction dudit ressort (7) lors de l'excitation de ladite bobine (6); une tige (12) installée dans ledit corps (2) de manière que ladite tige (12) glisse librement dans ledit corps (2); une première partie formant tiroir (4a) et une seconde partie formant tiroir (4b), raccordées à ladite tige (12); un tiroir coulissant de soupape comprenant ladite tige (12), ladite première partie formant tiroir (4a) et ladite seconde partie formant tiroir (4b); un orifice d'entrée (13) ménagé dans ledit corps (2); un orifice d'échappement (3) ménagé dans ledit corps (2); un orifice de sortie (11) ménagé dans ledit corps (2); ladite première partie formant tiroir (4a) et ladite seconde partie formant tiroir (4b) fermant et ouvrant ledit orifice d'échappement (13) et ledit orifice de sortie (3); ledit orifice de sortie (11) communiquant avec ladite tige (12) entre ladite première partie formant tiroir (4a) et ladite seconde partie formant tiroir (4b); une chambre de rétroaction (9) ménagée dans ledit corps (2) et placée en communication avec ladite tige (12) par l'intermédiaire d'un conduit de rétroaction (8); ladite chambre de rétroaction (9) possédant un diamètre supérieur au diamètre de ladite première partie formant tiroir (4a), et un élément d'extrémité de ladite première partie formant tiroir (4a), situé à l'opposé de ladite seconde partie formant tiroir (4b), pénétrant dans ladite chambre de rétroaction (9), caractérisé en ce qu'une plaque mince (10) est fixée à l'élément d'extrémité de ladite première partie formant tiroir (4a) et est positionnée dans ladite chambre de rétroaction (9) de manière à former une zone étranglée (16) d'un passage d'écoulement formé entre la paroi intérieure de ladite chambre de rétroaction (9) et le pourtour de ladite plaque mince (10), en formant un élément d'amortissement.

2. Soupape électromagnétique à action proportionnelle, du type à boucle fermée, pour une commande hydraulique selon la revendication 1, caractérisée en ce que le rapport $(S_2/S_1)$ de la surface en coupe transversale $(S_2)$ de ladite zone étranglée (16) du passage d'écoulement à la surface en coupe transversale $(S_1)$ de ladite plaque mince (10) est compris entre un rapport de surfaces $(S_2/S_1)$ correspondant à une limite supérieure d'un temps de réponse admissible et un rapport de surfaces $(S_2/S_1)$ situé au-dessous d'un domaine de résonance.

3. Soupape électromagnétique à action proportionnelle, du type à boucle fermée, pour une commande hydraulique selon la revendication 2, caractérisé en ce que la surface en coupe transversale $(S_2)$ de ladite zone étranglée (16) du passage d'écoulement n'est pas supérieure à 0,04 fois la surface en coupe transversale $(S_1)$ de ladite plaque mince (10).

4. Soupape électromagnétique à action proportionnelle, du type à boucle fermée, pour une commande hydraulique selon la revendication 3, caractérisée en ce que la paroi intérieure de ladite chambre de rétroaction (9) possède une forme cylindrique et que la plaque mince (10) possède une forme circulaire.

# FIG. 1

# FIG. 2

# FIG. 3

RATIO OF AREAS ($S_2/S_1$)

FIG. 4

FIG. 5

FIG. 6